# EUROPEAN PATENT APPLICATION

(11) **EP 2 650 170 A1**
(43) Date of publication of application: **16.10.2013**
(21) Application number: 13162783.8
(22) Date of filing: 08.04.2013
(51) Int. Cl.: B60P 1/64

(54) **Trailer provided with a movable coupling beam**

(30) Priority: 10.04.2012 NL 2008619
(71) Applicant: Vlastuin Group B.V., 4041 CP Kesteren (NL)
(72) Inventor: Folmer, Elibart Dirk, 6669 ML DODEWAARD (NL)
(74) Representative: Algemeen Octrooi- en Merkenbureau B.V.

(57) **Abstract**

The present invention, according to a first aspect thereof, relates to a drawn transport vehicle comprising a chassis (2) with at least one wheel axle, a gooseneck (4) for coupling the vehicle to be drawn to a drawing vehicle, and a coupling beam (5). The gooseneck (4) and/or the coupling (5) beam is/are provided with means of attachment for detachably attaching the coupling beam (5) to the gooseneck (4) at at least a first position and a second position different from the first position. Guide means (8,9) are provided which are designed to make it possible for a single person to move the coupling beam manually over the gooseneck between said at least first and second position. The invention further relates to a coupling beam (5) provided with means of attachment for detachably attaching the coupling beam to a gooseneck of a drawn transport vehicle, which coupling beam comprises a connecting beam (10), to either side of which a means of attachment is fixed, which means of attachment is designed for attaching the coupling beam (5) to a gooseneck of a transport vehicle. The underside of the connecting beam and the facing inner sides of the means of attachment together surround an at least substantially free U-shaped space, at least in a situation in which the coupling beam and the gooseneck are not locked together.

## Description

The present invention, according to a first aspect thereof, relates to a drawn (or at least to be drawn) transport vehicle comprising a chassis with at least one wheel axle, a gooseneck for coupling the vehicle to be drawn to a drawing vehicle, and a coupling beam provided with coupling means designed for being coupled to the underside of a container, which gooseneck and/or which coupling beam is/are provided with means of attachment for detachably attaching the coupling beam to the gooseneck at at least a first position and a second position different from the first position. A drawn (or to be drawn) transport vehicle is also referred to as "trailer" herein, and a drawing vehicle is referred to as "tractor". The coupling beam is provided for engaging corner points of a container, for example 20 ft or 40 ft sea containers, upon transport of the container. In the world of transport, the term "gooseneck" refers to a front chassis part of a trailer provided with a coupling pin on the underside, via which the trailer is drawn by a tractor, with the gooseneck extending substantially in a higher plane than the rest of the chassis.

A known trailer as described in the introduction has a twistlock beam, which is detachably attached to the gooseneck of the trailer at a first position. Because containers may be in different (standard) sizes, it is desirable, with a view to using the twistlock with different types of containers, that the twistlocks are or can be provided at the correct positions. With a view to optimizing the weight distribution of a trailer or a tractor-trailer combination it may be desirable that a specific type of container can be secured to the trailer at different positions, using twistlocks. With the known trailer, the twistlock beam can be removed from the gooseneck and subsequently be placed back on the gooseneck and be secured thereto at a second position different from the first position. With alternative trailers, the twistlock is provided in or on the gooseneck. Moving the twistlock beam is not an easy task, however, which in many cases, depending on local labour laws, may not be done by one person. Since a driver as a rule works individually, the known twistlock beam is in practice moved by one person all the same, or a driver may refuse to move the twistlock beam (single-handedly). In the first case health hazards may be involved, or in the second case the result may be delays and thus expense.

Accordingly it is an object of the present invention, according to a first aspect thereof, to provide a trailer that can be adapted to containers having different dimensions in a simple manner and at lower cost. This object is achieved by the present invention in that guide means are provided which are designed to make it possible for a single person to move the coupling beam manually over the gooseneck between said at least first and second position. This obviates the need to remove a coupling beam from the gooseneck, but the coupling beam can be moved without having to be removed from the goods neck in its entirety and be carried to the second position. The guide means also make it possible for a person, such as the driver of the vehicle, to have the coupling beam at least partially supported upon being moved, so that the task of manually moving the coupling beam between two position is further made easier. No mechanical aids are needed for moving the coupling beam. A driver is able to carry out these operations independently. The object of the invention is thus achieved.

From European patent application EP 1 795 436 A2 there is known a crane of which a coupling beam forms part. To the skilled person it is obvious that the coupling beam is not designed for being moved manually, but that it is integrated in the crane. The crane can be moved by means of the coupling beam via a horizontal hydraulic cylinder. Guide means and a sliding element are provided, to be true, but they are not intended to make it possible to move the crane manually. These elements function to prevent lateral forces on the cylinder and thus damage to the cylinder.

European patent application EP 0 180 683 A1 describes a system designed to make it possible to place a container on a truck and remove it therefrom in a simple manner. The system comprises a device comprising a lifting system disposed on a resistance system of the truck. The lifting system comprises a cylinder, which is fixed to a frame, and a plate for the lifting system. Although it is described in said document that a collapsing element can be "manually" tilted by means of a lever, it does not appear from EP 0 180 683 A1 that manually moving the frame is possible. The composition of the frame, the coupling means, the lifting means and the cylinder appear to make the whole so heavy that manual movement will be opposed. The description is furthermore clear as to the fact that a lever is needed for manually operating the collapsing means. It is known for a beam provided with a twistlock at the proximal end to be doubly pivoted to the goose neck on the two opposite sides of the goose neck. The term "doubly pivoted" is understood to mean that the beam can pivot to the gooseneck about a pivot axis at one end and that it can pivot like an elbow in the "centre". In the forwardly pivoted condition and the rearwardly pivoted condition, the pivoted beams can position the twistlocks into a front and a rear position, each corresponding to a standard dimension of a container and/or to a different position than a standard container. In this way the trailer can also be simply adapted for transporting two different types of containers, and/or in the case of a chassis of the adjustable length type, for transport with an extended or a non-extended chassis and/or with a different distribution of the weight of the cargo over the axles. A drawback of this solution, however, is the fact that the number of alternative positions is limited, at least more limited than the number of potential positions with the various combinations of (standard) types of containers and adjustable lengths of a trailer. In addition, the maximum distance over which the twistlocks can be moved is limited in that the maximum length of the pivotable beams is limited. A movable twistlock beam is capable of positioning twistlocks at many more positions than can the pivotable beams.

In a preferred embodiment of the present invention, the coupling means are of the twistlocks type. A twistlock is a coupling element that is known in the world of transport, for example for coupling sea containers provided with corresponding coupling means in the four corners of the bottom to a trailer. In the present document, the term twistlock is used not only for indicating said specific type of coupling means, but the term may also be understood to include coupling means for coupling a sea container and a trailer in a more general sense.

The coupling beam is preferably an independent device, wherein the functionality of the coupling beam is not combined with further functionalities. By extending the functionality of the movable coupling beam with additional functionalities, such as a crane or lifting function, the mass of the coupling beam will be unnecessarily increased. This would unnecessarily interfere with handling the coupling beam, in particular manually unlocking, moving and relocking the coupling beam.

In a preferred embodiment of the present invention, the transport vehicle is provided with adjusting means for adjusting the length of the transport vehicle. Thus, the length of the transport vehicle can be adapted to the dimension of a container to be transported. If a movable twistlock beam is used, said adaptation mainly concerns the weight distribution of the transport vehicle and the container, because the adjustable twistlock beam can be adapted to the length of a container in a relatively simple manner.

If the transport vehicle is provided with adjusting means for adjusting the wheelbase of the transport vehicle, the positioning of a container on the transport vehicle or the weight distribution of the loaded transport vehicle can be further optimised in combination with the movable twistlock beam.

It is preferable if the guide means comprise adjusting means by which a guiding condition and a non-guiding condition of the guide means can be set. In a guiding condition, the guide means preferably effect a relatively light movement of the twistlock beam relative to the gooseneck. In the non-guiding condition, on the other hand, it is desirable if the guide means are in a non-guiding condition, or at least in a condition in which they are not easily movable. The easier the guide means allow movement of a twistlock beam relative to a gooseneck, the greater the effort that is to be made for keeping the twistlock beam in a set position during transport of a container.

In a preferred embodiment, the adjusting means are of the self-adjusting type, for example in dependence on the load of the twistlock beam. One way of realising that is, for example, spring-suspending or spring-mounting a guide relative to the twistlock beam. According to one embodiment thereof, the guide means are spring-suspended via springs or rubber, for example, so that they will compress in case of a high load (in loaded condition) and not be overloaded, with the twistlock beam being directly supported on the gooseneck, and will lift the twistlock beam from the gooseneck in unloaded condition, so that it can be easily moved. The adjusting means may also be of a type that can be adjusted by being operated, for example by operating a lever.

In a preferred embodiment of the present invention, the guide means comprise rollers and/or balls for guiding the rolling movement of the twistlock beam over the gooseneck. Rolling the twistlock beam over the gooseneck requires relatively little effort or force from a user or a mechanical moving device. The rollers and/or balls carry the twistlock beam during movement thereof, as it were, and furthermore make it possible to reduce friction between the twistlock beam and the gooseneck during said movement.

It is preferable in that regard if the rollers and/or balls are in a retracted position in the locked condition of the twistlock beam, in which position they do not rest on the gooseneck or at least the chassis. Thus, the rollers and/or balls cannot support a relatively simple movement of the twistlock beam relative to the gooseneck in the locked condition.

A very advantageous embodiment of the present invention is realised if the twistlock beam is directly supported on the gooseneck in the non-guiding condition of the guide means and is spaced from the gooseneck in the guiding condition of the guide means, preferably with a vertical spacing present between the gooseneck and the guide means. As a result, a maximum amount of resistance is provided in the non-guiding condition, whilst a minimum amount of resistance is provided in the guiding condition of the guide means.

It is furthermore preferable if locking means are provided by which the twistlock beam can be locked in place at a desired position relative to the gooseneck. Preferably, said positions are in that case defined on the gooseneck at the positions that correspond to containers having different standard dimensions and possibly to a set length of the transport vehicle. The gooseneck may provide a fine-adjustment at the respective desired positions, so that a user can only choose the desired position upon movement of the twistlock beam, with the guide means "slipping" into the correct fine-adjustment, as it were, at the position in question.

To make rapid adjustment of the twistlock beam possible, it is preferable if the locking means are provided with quick-locking means that make quick locking and unlocking possible.

Preferably, reference means are provided, which reference means correspond to positions at which the twistlock beam is to be positioned relative to the gooseneck in the case of standard containers, possibly in dependence on the length of the transport vehicle. One of the possible embodiments thereof has already been discussed in the discussion of the guide means. The positions can also be made known to a user in a different manner, however, for example by means of visible indications.

Although it is possible to move a twistlock beam manually without much effort when a relatively smooth guide is used, the transport vehicle is provided with moving means in a preferred embodiment, by means of which movement of the twistlock beam can be servo-controlled. Such a feature is relatively easy to install in a transport vehicle, because transport vehicles of the type used for transporting containers comprise connecting means for electricity and/or air. If a transport vehicle of the type according to the invention is not provided with a battery and possibly an air vessel of its own, a tractor that can be coupled to the transport vehicle for moving the transport vehicle will certainly comprise such means. As in accordance with the principle idea underlying the invention the twistlock beam is manually movable, the twistlock beam can also be moved (manually) in the absence of powered moving means.

According to a second aspect, the present invention comprises a coupling beam designed for coupling a container to a drawn (to be drawn) transport vehicle, which coupling beam is provided with means of attachment for detachably attaching the coupling beam to a gooseneck of a drawn (to be drawn) transport vehicle, the coupling beam comprising a connecting beam, to either side of which a means of attachment is fixed, which is designed for attaching the coupling beam to a gooseneck of a transport vehicle, and which is provided with coupling means designed for being coupled to a container placed (to be placed) on the transport vehicle.

Such a coupling beam configured as a twistlock team is known, it is used as the removable twistlock beam discussed in the discussion of the first aspect of the invention. The known twistlock beam has positioning means that conform to the profile of a gooseneck, so that the twistlock beam is inserted in the gooseneck from the side as a left half and a right half, as it were, upon being attached to the gooseneck, whereupon they are locked from the upper sides by means of bins passed through the gooseneck and the left half and the right half, respectively, of the twistlock beam.

The object of the present invention is to provide a coupling beam which is detachably attached to a gooseneck of a drawn (to be drawn) transport vehicle and which can be moved in a simple manner between a first position and a second position different from the first position, which movement can be realised in a simpler manner than is possible with the known coupling beam. This object is achieved by the present invention in that at least one guide means is provided on the underside of the connecting beam and/or on the facing inner sides of the means of attachment, which guide means is designed for guiding the movement of the coupling beam over the gooseneck, at least in a condition in which the coupling beam is not locked to a gooseneck. Said at least one guide means is thus provided at a position where the coupling beam and the gooseneck make contact with each other, at least in the non-locked condition in which the coupling beam is movable relative to the gooseneck. Said at least one guide means may be inherently provided in that one or more contact surfaces between the coupling beam on the one hand and a means of attachment on the other hand make guided movement relative to each other between the first position and the second position different from the first position possible. The coupling beam according to the invention also makes it possible to provide further aids, which further facilitate movement of the coupling beam over a gooseneck, as will be explained in more detail below. In the position in which the coupling beam is attached to a gooseneck, the contact between said at least one guide means and the gooseneck may be released, but this is not necessary.

It is preferable in that case if the underside of the connecting beam and the facing inner sides of the means of attachment together define an at least substantially free U-shaped space, at least in the situation in which the coupling beam and the gooseneck are not locked together. Since the substantially U-shaped space on the inner side of the coupling beam is substantially free, no obstacles that may interfere with or prevent movement of the coupling beam over the gooseneck are present on the coupling beam. Thus, movement of the coupling beam over the gooseneck is made possible, so that moving the coupling beam is less labour-intensive than is the case with the known coupling beam, which must be removed from the gooseneck in its entirety for being moved, i.e. carried, to a different position on the gooseneck. In the situation in which the coupling beam is attached to a gooseneck, the coupling beam may comprise parts that extend into the U-shaped space, which parts are in that case precisely intended to prevent movement of the coupling beam. On the inner side of the U-shaped space, the coupling beam may comprise a profile which, in the situation in which the coupling beam is not attached to the gooseneck, comprises slightly inwardly projecting parts that correspond to recesses in the gooseneck with which the coupling beam mates in use. In the present documents such elements are considered to form part of the U-shape defined by the underside of the connecting beam and the inner sides of the means of attachment, even if the contours are not entirely straight. The coupling elements of the coupling beam are preferably provided on the means of attachment, although the coupling elements may also be located elsewhere on the coupling beam, for example being provided on a connecting beam that projects above or beyond the means of attachment.

In a preferred embodiment of the present invention, the coupling beam is a twistlock beam, which comprises a twistlock on or at least near the opposite ends. Alternatively, however, also other coupling means such as, for example, a flexilock, a sliding head (also referred to as Wing lock or Multi lock) or a bevelled coupling beam, may be used as the coupling system.

In a preferred embodiment of the present invention, the means of attachment each comprise a guide element which, in use, mates with a guide on a gooseneck of a transport vehicle. The guide means make it possible to move a twistlock beam in a relatively simple manner relative to a gooseneck.

As already discussed with reference to a preferred embodiment according to the first aspect of the present invention, rollers and/or balls are preferably provided on each of the means of attachment, via which rollers and/or balls the twistlock beam rolls over a gooseneck while the twistlock beam is being moved.

The present invention will now be explained in more detail with reference to an exemplary embodiment of the present invention as shown in the appended drawing, in which:
Figure 1 is a perspective view of a preferred embodiment of a semitrailer according to the present invention;
Figure 2 is a top plan view of the semitrailer of figure 1;
Figure 3 is a detail view of the gooseneck of the semitrailer of figure 1;
Figure 4 is a detail view of the attachment of a movable twistlock beam to the gooseneck;
Figure 5 is an exploded view of an exemplary embodiment of a coupling beam according to the present invention;
Figure 6 is a schematic, vertical sectional view showing the orientation of a movable twistlock beam and a gooseneck; and
Figure 7 shows an alternative embodiment of a movable twistlock beam.

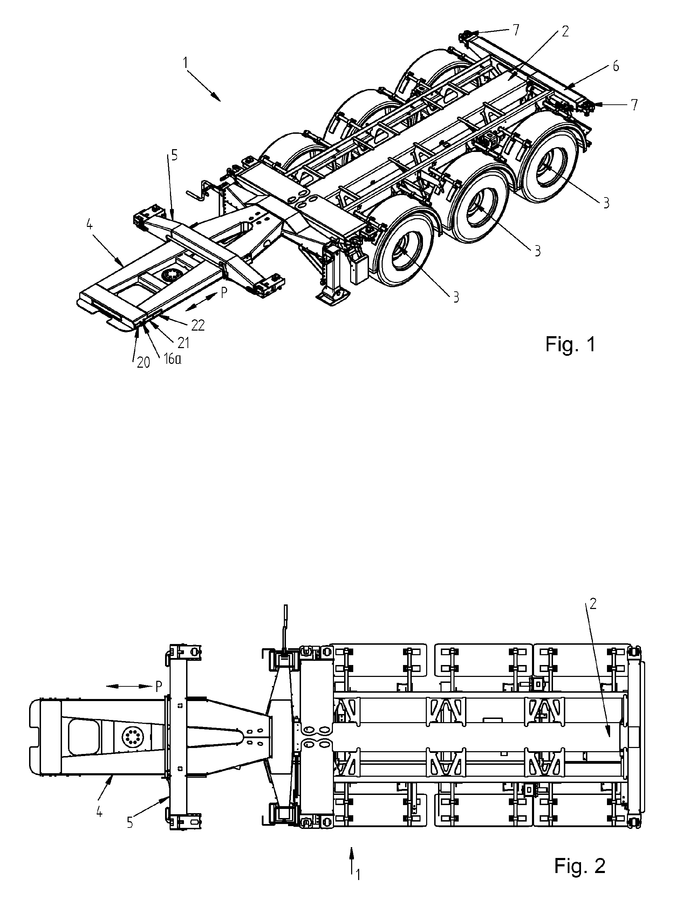

With reference now to figures 1 and 2, there is shown in perspective view and in top plan view, respectively, a semitrailer 1 according to an exemplary embodiment of the present invention. The semitrailer 1 comprises a chassis 2 with three wheel axles 3 and, at the front side, a gooseneck 4 with a twistlock beam 5. With the exception of the gooseneck 4 and the twistlock beam 5, the chassis 2 of the semitrailer may have practically any known form. Located at the front side of the chassis 2 is the gooseneck 4, to which a twistlock beam 5 is attached. Although reference is invariably made to twistlock couplings in the description of the present embodiment, it is of course possible to provide the coupling beam with other standard or non-standard coupling means for coupling a container to the semitrailer. In use it is of course important that the right type of coupling means be provided on the coupling beam, which coupling means must correspond to the coupling means at the bottom corner points of a container to be transported. Located at the rear side of the chassis 2 is a cross beam 6, which is provided with a twistlock 7 on both sides. Thus, the four corners of a container can be coupled to the trailer via four twistlocks. Arrow P indicates the direction of movement of the twistlock beam 5 relative to the gooseneck 4. Located at the front side of the gooseneck 5 are adjusting means 20, 21 and 22, with a recess 16a' present therebetween.

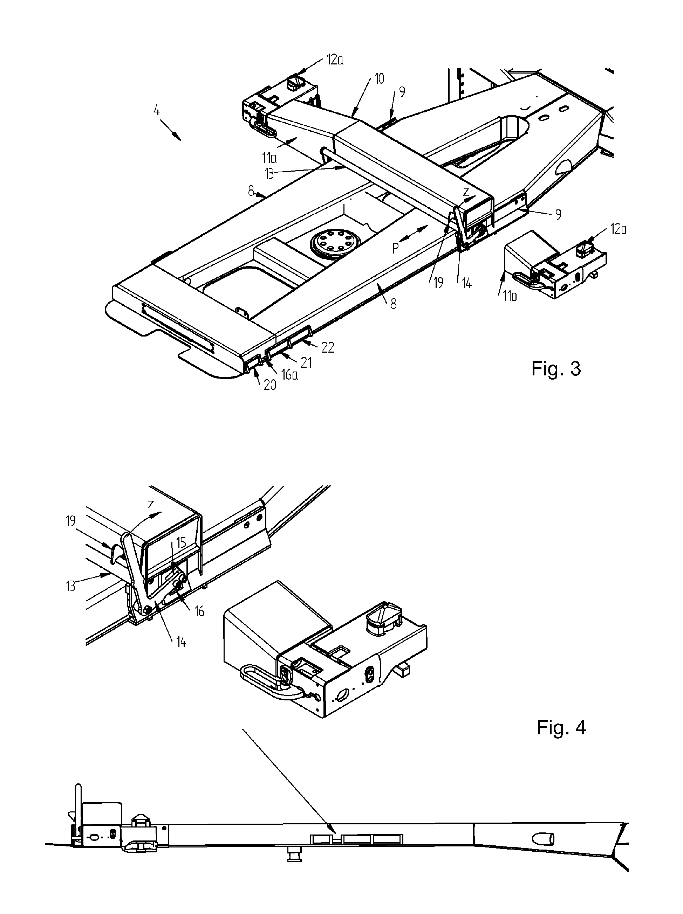

Figure 3 is a more detailed view of the gooseneck 4 of the semitrailer 1 and the twistlock beam 5 attached thereto. The gooseneck 4 is a gooseneck that is commonly known from known trailers. Guides 8 are provided on the sides of the gooseneck 4, over which guides guide elements 9 provided on the twistlock beam 5 can be moved and guided in the direction indicated by arrow P, between a rear position, which is shown in figure 3 and more forward positions, one of which is shown in figure 3, by means of adjusting elements 20, 21, 22, which are provided as adjusting means on the front end of the guide 8. The guide elements 9 support a connecting beam 10 provided with coupling elements 11a, 11b extending in line with the connecting beam 10 (for a correct understanding of the present invention, part of the coupling element 11b is left out), to which coupling elements the twistlocks 12a, 12b are coupled. The underside of the connecting beam 10, together with the inner side of the coupling elements 11a, 11b and the guide elements 9 attached thereto, defines a substantially inverse U-shape as described in the claims. Furthermore provided on the connecting beam 10 is a locking element 13, which can be moved in the direction indicated by arrow Z by means of the lever 14, between and unlocked position shown in figures 3 and 4 and a locked position (not shown), in which the lever 14 has been moved clockwise in comparison with figures 3 and 4 in which the arms of the lever 14 have a more vertical and horizontal orientation. Upon pivoting of the locking block 15, the lever 14 moves downward into a recess 16a provided in the guide 8 (see also the recess 16a' between the adjusting elements 20 and 21 for locking the twistlock beam 5 in the front position) and a recess 16 provided in the guide element 9. The locking block 15 can slip between locking cams provided in the guide 8 for locking the twistlock beam 5 in place at a particular position. Provided on the connecting beam 10 is a hook 17, which is capable of engaging a locking element 13 in the locked condition of the lever 14 and the locking block 15, so that the lever cannot undesirably move out of the locking position.

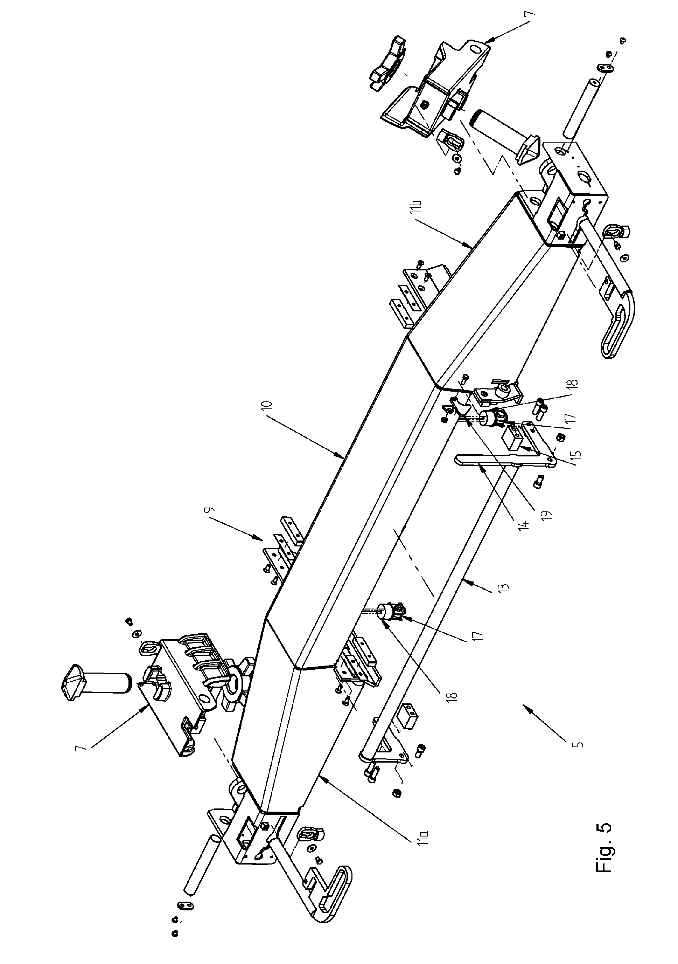

Figure 5 is an exploded view of the twistlock beam 5 of figures 1-4, without the gooseneck, however. From this figure it can be inferred that the guide element 9 is a conventional guide element, which may have been adapted as regards its dimensions and the loads to be taken up to the specific use as a guide element 9 for a twistlock beam. The guide element 9 comprises rollers 17, which are in rolling contact with a gooseneck (not shown in figure 5) while guiding the twistlock beam. As the figure furthermore shows, the twistlock beam 5 can be supported on a gooseneck via springs 18. In unloaded condition, the twistlock beam 5 is spaced some distance above the gooseneck on account of the bias of the springs, so that contact between the twistlock beam 5 and the gooseneck will take place with the lowest friction possible. In loaded condition, and certainly if a container is supported on the trailer via the twistlock beam 5, the springs 18 will be in a compressed condition and the twistlock beam 5 will be firmly supported on the gooseneck of the trailer, wherein the very force or gravity from the container already generates a high amount of friction between the twistlock beam 5 and a gooseneck of a trailer.

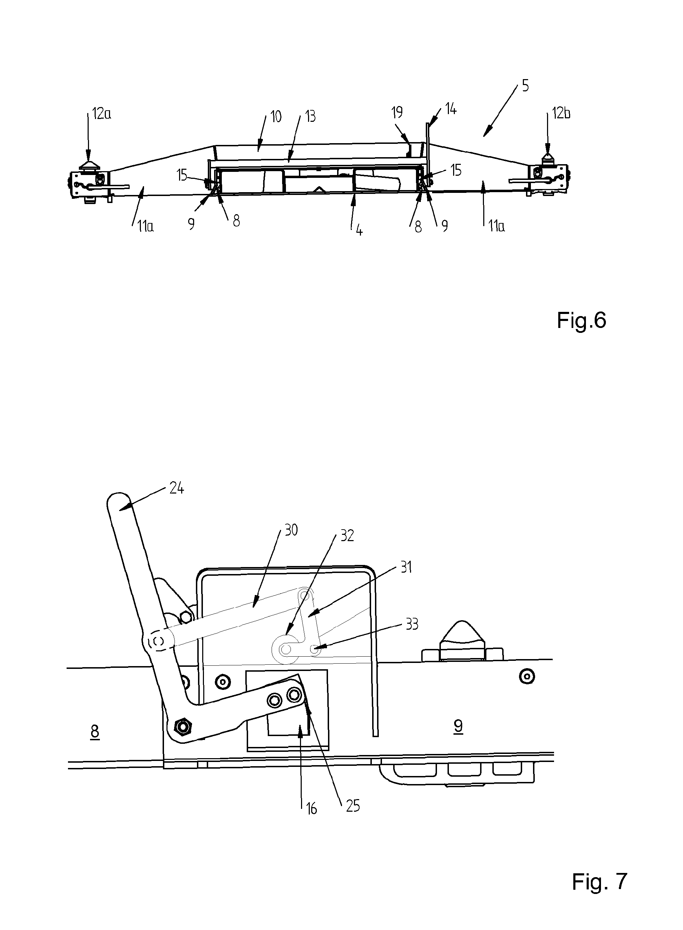

Figure 6 is a schematic cross-sectional view of a twistlock beam 5 which is movably provided on a gooseneck 4. The connecting beam 10 extends above the gooseneck 4 and is provided with coupling elements 11a and 11b on either side, which coupling elements are provided with the guide elements 9 on their inner sides, which guide elements substantially abut against the guides 8. By pivoting the lever 14 to the rear, seen in the plane of figure 6, the locking block 15 will be moved downward and be locked in position in the recess 16 and the recess 16a (which latter recess is not shown in figure 6). Moreover, the locking element 13 will be moved toward the hook 17, where it can be locked in position by the hook 17. As a result of this the guide is blocked. By releasing the hook 17, the lever 14 can be moved to the position shown in figures 4, 5 and 6 again, making guided movement of the twistlock beam 5 over the gooseneck 4 possible.

Figure 7 is a detail view of an alternative embodiment of the twistlock beam according to the invention. The lever 24 is connected to a j-shaped attachment via a rod 30 that is pivoted at both ends, which attachment is provided with a roller 32 at the other end, which roller is rollably supported on the guide 8. In the corner between the two ends, said j-shaped attachment is pivoted to the connecting beam 10. Upon pivoting of the lever 24, not only the locking block 25 is lockingly received in the recess 16, 16a. The j-shaped attachment pivots in clockwise direction, so that the roller 32 will move upward and the connecting beam 20 is lowered onto the guide 8. Thus, guided rolling movement between the connecting beam 10 and the guide 8 via the roller 32 is no longer possible.

In the appended drawing and the above description the present invention is shown and described with reference to only one embodiment. It will be understood, however, that many variants, which may or may not be obvious to the skilled person, are possible within the scope of the present invention, which is defined by the appended claims. The present document describes an exemplary embodiment which comprises only two setting possibilities for position of a twistlock beam. It will be understood that the number of setting possibilities may be much greater. Furthermore, coupling means of a different type instead of a twistlock may be provided for coupling a container to a trailer. Twistlocks are only one of the various (standard) coupling means that are commercially available. Furthermore it is possible to exchange the locking element for a different locking element, for example one in which locking the twistlock beam involves moving the position of the rollers (not to be confused with the roller 32) from a guiding position to a non-guiding position, and conversely. In the case of rollers having a horizontal axis of rotation, the axis of rotation could be raised relative to the rest of the twistlock beam, for example, upon movement of the twistlock beam to a locking position and be lowered upon unlocking of the twistlock beam. In the first position, the rollers may be accommodated within the contours of the connecting beam in their entirety, as a result of which the twistlock beam itself will be supported on the gooseneck. In the second, unlocked position, the rollers extend at least partially under the twistlock beam and facilitate rolling movement of the twistlock beam over a gooseneck. Furthermore, the present invention has only been described and shown in combination with a semitrailer as the trailer, but the present invention can equally well be used with regular trailers. Furthermore, no attention has been paid in the description to the possibility of extending or reducing the length of a trailer in dependence on the container to be transported, the movement of the weight and/or the wheelbase of the trailer. It will be understood that a movable twistlock beam according to the present invention is suitable for use with such a trailer. Although the combination of an extendable trailer and a twistlock beam according to the present invention may offer major advantages, the possibility of extending a trailer has hardly been discussed, if at all, herein because many well-known applications are available for this in practice and thus known to the skilled person.

## Claims

1. A drawn (or at least to be drawn) transport vehicle comprising a chassis with at least one wheel axle, a gooseneck for coupling the vehicle to be drawn to a drawing vehicle, and a coupling beam provided with coupling means designed for being coupled to the underside of a container, which gooseneck and/or which coupling beam is/are provided with means of attachment for detachably attaching the coupling beam to the gooseneck at at least a first position and a second position different from the first position, **characterised in that** guide means are provided which are designed to make it possible for a person to move the coupling beam manually over the gooseneck between said at least first and second position.

2. A transport vehicle according to claim 1, **characterised in that** the coupling beam is an independent device, wherein the functionality of the coupling beam is not combined with further functionalities.

3. A transport vehicle according to claim 1 or 2, **characterised in that** the transport vehicle is provided with adjusting means for adjusting the length and/or the wheelbase of the transport vehicle.

4. A transport vehicle according to one or more of the preceding claims, **characterised in that** the guide means comprise adjusting means by which a guiding condition and a non-guiding condition of the guide means can be set.

5. A transport vehicle according to claim 4, **characterised in that** the adjusting means are of the self-adjusting type.

6. A transport vehicle according to one or more of the preceding claims, **characterised in that** the guide means comprise rollers and/or balls for guiding the rolling movement of the coupling beam over the gooseneck.

7. A transport vehicle according to claim 6, **characterised in that** the rollers and/or balls are in a retracted position in the locked condition of the coupling beam, in which position they do not rest on the gooseneck or at least the chassis.

8. A transport vehicle according to one or more of claims 4-7, **characterised in that** the coupling beam is directly supported on the gooseneck in the non-guiding condition of the guide means while being spaced from the gooseneck in the guiding condition of the guide means.

9. A transport vehicle according to one or more of the preceding claims, **characterised in that** reference means are provided, which reference means correspond to positions at which the coupling beam is to be positioned relative to the gooseneck in the case of standard containers, possibly in dependence on the length of the transport vehicle.

10. A transport vehicle according to one or more of the preceding claims, **characterised in that** the transport vehicle comprises moving means, by means of which movement of the coupling can be servo-controlled.

11. A coupling beam designed for coupling a container to a drawn (to be drawn) transport vehicle, which coupling beam is provided with means of attachment for detachably attaching the coupling beam to a gooseneck of a drawn (to be drawn) transport vehicle, the coupling beam comprising a connecting beam, to either side of which a means of attachment is fixed, which is designed for attaching the coupling beam to a gooseneck of a transport vehicle, and which is provided with coupling means designed for being coupled to a container placed (to be placed) on the transport vehicle, **characterised in that** at least one guide means is provided on the underside of the connecting beam and/or on the facing inner sides of the means of attachment, which guide means is designed to make it possible for a person to move the coupling beam manually over the gooseneck, at least in a condition in which the coupling beam is not locked to a gooseneck, for example between a first position and a second position different from the first position relative to the gooseneck.

12. A coupling beam according to claim 11, **characterised in that** the underside of the connecting beam and the facing inner sides of the means of attachment together define an at least substantially free U-shaped space, at least in the situation in which the coupling beam and the gooseneck are not locked together.

13. A coupling beam according to claim 12, **characterised in that** the coupling beam is a twistlock beam, which comprises a twistlock on or at least near the opposite ends.

14. A coupling beam according to claim 13, **characterised in that** the means of attachment each comprise a guide element which, in use, mates with a guide on a gooseneck of a transport vehicle.

15. A coupling beam according to claim 13 or 14, **characterised in that** rollers and/or balls are provided on each of the means of attachment, via which rollers and/or balls the coupling beam rolls over a gooseneck while the coupling beam is being moved.
